# EUROPÄISCHE PATENTSCHRIFT

(11) **EP 0 828 994 B1**
(45) Veröffentlichungstag und Bekanntmachung des Hinweises auf die Patenterteilung: **13.06.2001**
(21) Anmeldenummer: 96917415.0
(22) Anmeldetag: 23.05.1996
(51) Int. Cl.: G01F 1/30

(54) **MESSEINRICHTUNG ZUR ERFASSUNG DER FÖRDERSTÄRKE EINES SCHÜTTGUTSTROMES**
MEASUREMENT DEVICE FOR DETERMINING THE RATE OF A FLOW OF BULK MATERIALS
DISPOSITIF DE MESURE DU DEBIT D'UN FLUX DE MATIERES EN VRAC

(30) Priorität: 02.06.1995 DE 19520264
(43) Veröffentlichungstag der Anmeldung: 18.03.1998
(73) Patentinhaber: Friedrich, Claus, 35457 Lollar (DE)
(72) Erfinder: Friedrich, Claus, 35457 Lollar (DE)
(74) Vertreter: Knefel, Cordula, Dipl.-Phys.
(86) Internationale Anmeldenummer: EP9602228
(87) Internationale Veröffentlichungsnummer: WO9638713

(56) Entgegenhaltungen:
- WO-A-93/22633
- DE-A- 2 947 414

## Beschreibung

Die Erfindung betrifft eine Meßeinrichtung zur Erfassung der Förderstärke eines Schüttgutstromes nach dem Oberbegriff des Anspruches 1 oder 2.

Bei den bekannten Vorrichtungen fällt das Schüttgut auf eine Prallplatte oder eine Pralleinrichtung gemäß der DE-OS 29 47 414 Al, derart, daß die Prallplatte vorzugsweise in horizontaler Richtung ausgelenkt wird. Die Größe der Auslenkung dient als Maß für die Fördermenge des durchlaufenden Schüttgutstromes.

Damit das Schüttgut mit relativ großer Kraft auf die Prallplatte trifft, wird das Schüttgut gemäß der DE-OS 29 47 414 A1 von seiner senkrechten Fallrichtung durch einen Führungskörper seitlich derart abgelenkt, daß der Schüttgutstrom auf die vertikal angeordnete Prallplatte unter einem Winkel trifft. In einer geänderten Ausbildung ist die Prallplatte derart abgerundet, daß der Schüttgutstrom auf die Prallplatte trifft und schleifend an der Prallplatte entlanggleitet.

Es hat sich gezeigt, daß die bekannten Maßnahmen nicht ausreichen, um die Aufprallwirkung des Schüttgutes so zu gestalten, daß mit genügender Genauigkeit die Menge des durchlaufenden Gutes bestimmt werden kann. Denn die Wucht des auf die Prallplatte treffenden Schüttgutstromes, selbst wenn die Prallplatte gemäß der DE-OS 29 47 414 A1 in der Fallrichtung durchgebogen ist, hängt von einer Reihe von Faktoren ab, welche bei den Einrichtungen nach dem Stand der Technik nicht berücksichtigt werden und werden können.

Die Auslenkung der Prallplatte wird einerseits von der Geschwindigkeit, mit der das Schüttgut auf die Prallplatte trifft, bestimmt, ferner von dem Aufprallwinkel des Schüttgutstromes, schließlich aber auch von der Beschaffenheit des Schüttgutes selbst. Denn es hat sich gezeigt, daß beispielsweise unterschiedliche Körnerfrüchte, wie Weizen, Gerste, Hafer und dergleichen, aber auch Mais, Erbsen, Bohnen und dergleichen mit unterschiedlichen Querschnittsgeschwindigkeiten durch das der Prallplatte vorgelagerte Zuführungsrohr laufen, was einerseits durch die Reibung der Körner aneinander bedingt ist, also im wesentlichen auf der Oberflächenbeschaffenheit der Körner beruht, zum anderen aber auch von der Reibung des Schüttgutes an der Innenwandung der Führungsrohre abhängt.

Es wurde ferner gefunden, daß die Genauigkeit der Erfassung des durchlaufenden Schüttgutstromes auch von der Menge des durchlaufenden Schüttgutes abhängig ist, also davon, ob das Zuführungsrohr für das Schüttgut über seinen gesamten Querschnitt mit Schüttgut angefüllt ist oder nur zum Teil, indem beispielsweise ein schräg angestelltes Zuführungsrohr nur Körner im Bereich seiner unteren Mantellinie entlanglaufen läßt.

Durch diese Einflüsse bedingt treten bei der Messung der Förderstärke des Schüttgutstromes durch Auswanderung einer Prallplatte Fehler auf, welche insbesondere die Linearität der Auswanderung der Prallplatte in Abhängigkeit von der durchlaufenden Schüttgutmenge verfälschen.

Aufgabe der Erfindung ist es, eine Meßeinrichtung für das durchlaufende Schüttgut anzugeben, bei der die Meßeinrichtung so ausgebildet ist, daß unabhängig von der Art des durchlaufenden Schüttgutes und unabhängig von der Größe des durchlaufenden Schüttgutstromes eine linear vom durchlaufenden Schüttgutstrom erhaltene Auswanderung der "Prallplatte" mit Bezug auf eine Wägezelle, vorzugsweise einer Plattformwaage, und vorzugsweise in horizontaler Richtung erhalten wird. Mit anderen Worten, Zweck der Erfindung ist es, eine Meßeinrichtung anzugeben, welche mit hoher Genauigkeit die unterschiedlichsten Schüttgüter unabhängig von der Durchlaufmenge exakt erfaßt.

Diese Aufgabe wird durch das kennzeichnende Merkmal des Anspruches 1 und/oder 2 gelöst.

Dadurch, daß das Schüttgut, wie an sich bekannt, gemäß dem Anspruch 1 zunächst auf die Wand des Prallrohres trifft und seine Auslenkung mittels einer an sich bekannten, exzentrisch gelagerten Wägezelle gemessen wird, kann aus der Auslenkung auf die durchlaufende Schüttgutmenge besser als bisher geschlossen werden, da eine als Rohr ausgebildete Prallvorrichtung das durchlaufende Schüttgut hinsichtlich der Aufprallwinkel der Körner besser erfaßt als die bisher verwendeten ebenen oder einseitig gebogenen Prallplatten. Dieser Wirkanteil der Auslenkung wird in weiterer Ausgestaltung der Erfindung dahingehend verbessert, daß dieser ersten Auslenkung eine zweite Auslenkung durch das auf das abgewinkelte, vorzugsweise gekrümmt abgewinkelte Rohrstück treffende Schüttgut überlagert wird, wobei die Krümmung vorteilhaft so groß ist, daß sämtliche Körner des Schüttgutstromes auf den abgewinkelten Teil des Prallrohres ein zweites Mal treffen.

Durch die Überlagerung dieser beiden Auslenkungen sowie durch die Rohrausbildung der Prallvorrichtung wird, wie sich gezeigt hat, bereits eine hohe Linearität zwischen der Auswanderung des Prallrohres und der durchlaufenden Menge des Schüttgutes erhalten.

Die angestrebte Linearität zwischen der Auswanderung einer Prallplatte und des Schüttgutes läßt sich aber auch dadurch verbessern, daß gemäß dem Anspruch 2 der Prallvorrichtung eine Bremseinrichtung für den durchlaufenden Schüttgutstrom vorgelagert wird, indem beispielsweise das Zuführungsrohr im Bereich des senkrecht abgewinkelten Einlaufrohres eine Vertiefung aufweist, in der sich zunächst Schüttgut sozusagen als Polster sammelt, so daß die Körner des Schüttgutstromes bei ihrer Umlenkung und dem freien Fall durch Aufprall auf dieses Polster gebremst werden. In das Einlaufrohr gelangen die Körner vom Schüttgutpolster sozusagen im Überlauf über die Verbindung der beiden Rohre in das Einlaufrohr und schließlich in das Prallrohr. Vom Einlaufrohr her, das schräg zum Prallrohr angeordnet ist, vorteilhaft unter einem Winkel von etwa 90°, trifft also das Schüttgut gebremst auf die innere Wandung des Prallrohres und hiernach im freien Fall auf die untere Krümmung dieses Rohres.

In weiterer Ausgestaltung der Erfindung wird der Zulauf des Schüttgutstromes zum Prallrohr durch eine oder mehrere Blenden gebremst. Diese Blenden sind vorteilhaft im Zuführungsrohr vorgesehen. Denn es wurde gefunden, daß ein in seiner Laufgeschwindigkeit gebremster Schüttgutstrom zu wesentlich genaueren Meßergebnissen führt, und zwar unabhängig von der Menge des durchlaufenden Schüttgutes und auch von der Beschaffenheit des Schüttgutes.

Um auch sehr kleine Mengen durchlaufenden Schüttgutes sicher zu erfassen, besteht die Blende in weiterer Ausgestaltung der Erfindung vorteilhaft aus zwei Blendenteilen, welche zwischen sich eine öffnung freilassen. Die Blendenteile sind symmetrisch zur unteren Mantellinie dieses Rohres angeordnet, so daß das im Bereich dieser Mantellinie durchlaufende Schüttgut ungebremst die Blende passiert.

Um kleine Schüttgutmengen nicht der Bremswirkung des Schüttgutpolsters auszusetzen, trifft das in dem Bereich der Blendenteile durch das Zuführungsrohr ungehindert hindurchtretende Schüttgut in weiterer Ausgestaltung der Erfindung auf eine hinter der Öffnung zwischen den Blendenteilen vorgesehene Schrägfläche, auf der das Schüttgut in Richtung auf die Prallrohrwandung, durch das Schüttgutpolster ungebremst, geführt wird.

Es hat sich gezeigt, daß bei dieser Ausbildung große Schüttgutmengen gebremst auf die Prallvorrichtung treffen, kleine Schüttgutmengen dagegen ungebremst, so daß auch diese mit hoher Genauigkeit linear durch die Plattformwägezelle erfaßt werden.

Weitere Einzelheiten der Erfindung können den Unteransprüchen entnommen werden.

Auf der Zeichnung sind Auführungsbeispiele der Erfindung dargestellt, und zwar zeigen:
- Fig. 1: einen Längsschnitt durch die Meßeinrichtung;
- Fig. 2: einen Schnitt nach der Linie II-II der Fig. 1;
- Fig. 3: ein geändertes Ausführungsbeispiel;
- Fig. 4: einen Schnitt nach der Linie IV-IV der Fig. 3.

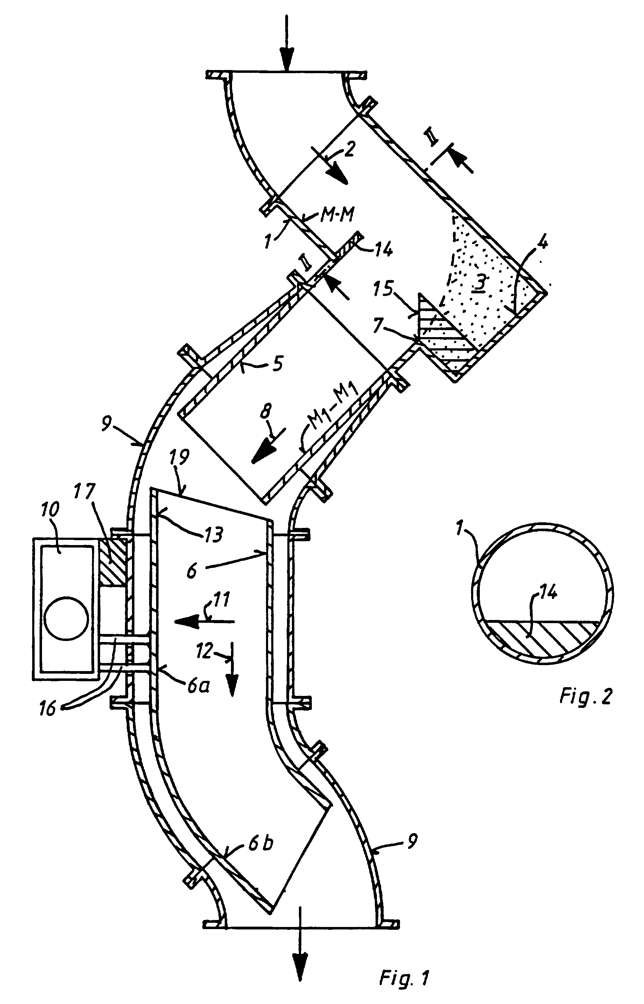

Gemäß Fig. 1 wird durch ein schräg, vorzugsweise unter einem Winkel von etwa 45° zur Horizontalen angestelltes Zuführungsrohr (1) Schüttgut (3) in Richtung des Pfeiles (2) angeliefert. Das Schüttgut (3) fällt in eine Vertiefung (4) des Zuführungsrohres (1) und lagert sich dort als Polster für den Schüttgutstrom ab. An dem Zuführungsrohr (1) ist rechtwinklig ein Einlaufrohr (5) befestigt, das den Schüttgutstrom im Überlaufverfahren vom Schüttgutpolster in das Prallrohr (6) lenkt. Das Prallrohr (6) ist mit seinem Teil (6a) vertikal ausgerichtet angeordnet und läuft an seinem unteren Ende (6b) gekrümmt aus. Die Krümmung ist so groß, daß der Schüttgutstrom im freien Fall stets auf das gekrümmte Ende (6b) des Prallrohres (6) trifft. Die gesamte Pralleinrichtung ist von einem Rohr (9) umgeben, das mit dem Zuführungsrohr (1) und dem Einlaufrohr (5) fest verbunden ist.

Das Schüttgut (3) trifft längs der unteren Mantellinie M₁-M₁ des Einlaufrohres (5) in Richtung des Pfeiles (8) gegen den Wandteil (6a) des Prallrohres (6). Das Prallrohr (6) ist mit der Wägezelle einer ortsfesten Plattformwaage (10) über zwei Stifte (16) verbunden. Das Gehäuse der Plattformwaage (10) ist über ein Einsatzstück (17) fest mit dem Rohr (9) verbunden. Durch den Aufprall des Schüttgutes auf den Wandteil (6a) des Prallrohres (6) wandert dieses in Richtung des Pfeiles (11) in horizontaler Richtung um einen geringen Betrag aus. Die Auswanderung wird von der Plattformwägezelle der Plattformwaage (10) unabhängig vom Ort des Aufpralles der Schüttgutkörner auf die Wandung des Prallrohres erfaßt. Hiernach fällt das Schüttgut in Richtung des Pfeiles (12) durch den vertikalen Teil (6a) des Prallrohres (6) nach unten und trifft hier auf den abgewinkelten, das heißt gekrümmt verlaufenden Endteil (6b) des Prallrohres (6).

Die Abwinkelung oder Krümmung ist derart ausgebildet, daß das auftreffende Schüttgut die Auswanderung des Prallrohres (6) in Richtung des Pfeiles (11) verstärkt.

Durch die doppelte Krafteinwirkung des Schüttgutstromes auf das Prallrohr (6) bedingt, erhält man in Abhängigkeit von den üblicherweise durchlaufenden Schüttgutmengen eine nahezu lineare Auslenkung des Rohres.

Plattformwaagen gemäß der Erfindung weisen Dehnungsplättchen auf, welche sehr empfindlich sind, das heißt bereits auf sehr geringe Ausweichungen des Prallrohres (6) ansprechen. Damit der Schüttgutstrom nicht zu heftig auf das Prallrohr auftrifft, wird er durch Bremseinrichtungen in seiner Laufgeschwindigkeit gebremst.

Für die Bremsung des Schüttgutstromes ist im Zuführungsrohr (1) eine Blende (14) vorgesehen (siehe auch Fig. 2), welche die Durchlaufgeschwindigkeit des Schüttgutstromes bremst. Der Schüttgutstrom trifft hinter der Blende auf eine Vertiefung (4), in der sich ein Schüttgutpolster (3) als weiteres Bremsmittel ablagert. Erst dann, wenn das Schüttgutpolster so groß ist, daß es den Überlauf (7) der Verbindungsstelle des Rohres (1) mit dem Rohr (5) überläuft, rieselt es im Rohr (5) in Richtung des Pfeiles (8) in das Prallrohr (6) ein. Die Oberkante (19) des Prallrohres (6) ist hierzu in Richtung auf das Einlaufrohr (5) geneigt. Das Zuführungsrohr (1) ist unter einem Winkel von etwa 45° zur Vertikalen angestellt. Das Einlaufrohr (5) und das Zuführungsrohr (1) bilden etwa einen rechten Winkel, so daß das Schüttgut auf das Prallrohr (6) in einer Schrägrichtung von etwa 45° trifft.

Durch die zweifache Bremsung, das heißt einerseits durch die Blende (14) und andererseits durch das Schüttgutpolster (3) erhält man eine sehr genaue lineare Auslenkung des Rohres (6), unabhängig von der Art des durchlaufenden Gutes und unabhängig von den durchlaufenden Schüttgutmengen.

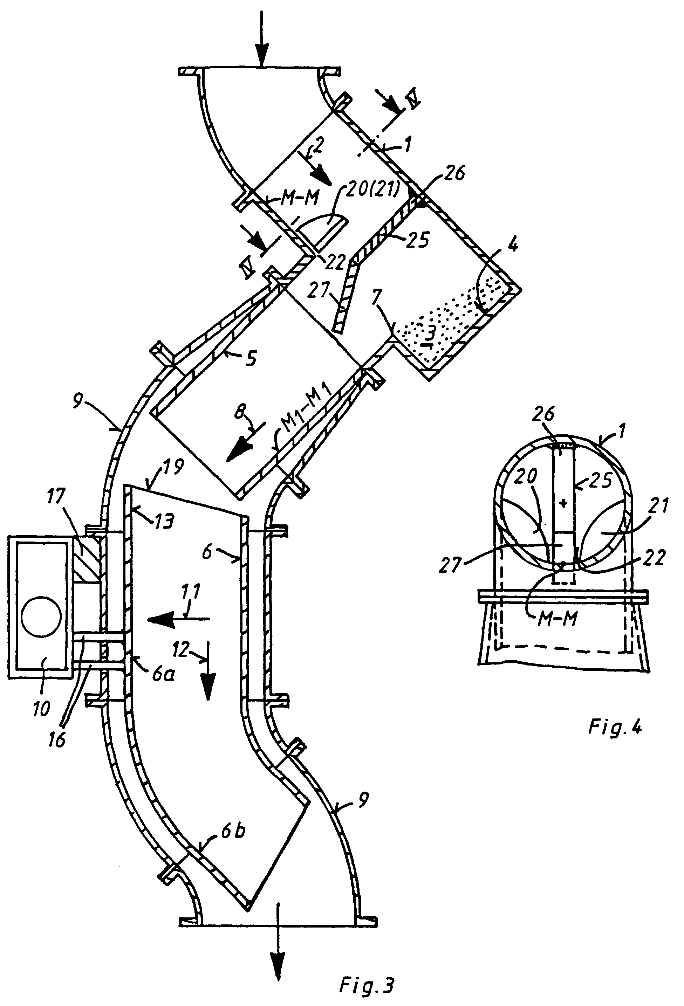

Bei sehr kleinen durchlaufenden Schüttgutmengen kann sich die Bremsung jedoch nachteilig auf die Linearität der Auslenkung der Wägezelle auswirken. Um die Linearität in Abhängigkeit von der durchlaufenden Schüttgutmenge in Weiterbildung der Erfindung für den Durchlauf sehr kleiner Mengen von Schüttgut längs der Mantellinie M-M des Zuführungsrohres (1) zu verbessern, ist im Zuführungsrohr (1) gemäß den Fig. 3 und 4 die Blende (14) in zwei Blendenteile (20 und 21) aufgeteilt, so daß das einlaufende Schüttgut einerseits in den Bereich seiner unteren Mantellinie M-M gezwungen wird und andererseits ungehindert durch die Öffnungen zwischen den Blendenteilen (20, 21) hindurchlaufen kann.

Geringe Schüttgutmengen werden durch die Blendenteile (20, 21) in den Bereich der unteren Mantellinie M-M des Zuführungsrohres (1) gezwungen. Dieser Schüttgutstrom trifft auf eine schmale Schrägfläche (15), welche den Schüttgutstrom unmittelbar in das Einlaufrohr (5) lenkt, also nicht auf das Schüttgutpolster (3) gelangen läßt, so daß geringe Schüttgutmengen ohne Bremsung durch eine Blende und/oder das Schüttgutpolster auf das Prallrohr (6) treffen.

Anstelle der Schrägfläche (15) kann gemäß Fig. 3 im Schüttgutstrom eine Platte (25) vorgesehen sein, die mit einem Ende (26) am Zuführungsrohr (1) befestigt ist und deren anderes Ende (27) schräg nach unten in Richtung der Mantellinie M₁-M₁ des Einlaufrohres (5) abgewinkelt ist.

Auf dieser Platte oder auf der Schrägfläche (15) läuft das Schüttgut bei kleinen Schüttgutmengen, ohne auf den Schüttgutpuffer zu treffen, auf der Platte sauber gegen den Wandteil (6a) des Prallrohres (6) und trifft dann ein zweites Mal auf das gekrümmte Ende dieses Rohres.

Es hat sich gezeigt, daß die vorliegende Meßvorrichtung mit großer Genauigkeit den durchlaufenden Schüttgutstrom des Prallrohres (6) erfaßt, und zwar in linearer Abhängigkeit von der durchlaufenden Schüttgutmenge, ferner aber auch unabhängig von der Art des Schüttgutes und auch dann, wenn die durchlaufende Schüttgutmenge sehr gering ist.

### Bezugszahlen

- 1: Zuführungsrohr
- 2: Pfeil
- 3: Schüttgut
- 4: Vertiefung
- 5: Einlaufrohr
- 6: Prallrohr
- 6a: senkrechter Teil des Prallrohres (6)
- 6b: unteres Ende des Prallrohres (6)
- 7: Überlauf
- 8: Pfeil
- 9: Rohrumhüllung
- 10: Plattformwaage
- 11: Pfeil
- 12: Pfeil
- 13: Einlaßöffnung für das Prallrohr (6)
- 14: Blende
- 15: Schrägfläche
- 16: Stifte
- 17: Einsatzstück
- 19: obere Kante
- 20: Blendenteil
- 21: Blendenteil
- 22: Durchlaßöffnung

- 25: Platte
- 26: ein Ende der Platte (25)
- 27: anderes Ende der Platte (25)

- M-M: Mantellinie des Zuführungsrohres (1)
- M₁-M₁: Mantellinie des Einlaufrohres (5)

## Patentansprüche

1. Meßeinrichtung zur Erfassung der Förderstärke eines Schüttgutstromes mit einer Leitvorrichtung für den Schüttgutstrom sowie einer ausweichbar gelagerten Prallvorrichtung, auf die der Schüttgutstrom beim Durchlaufen der Einrichtung trifft, und bei der aus der Größe der Auslenkung der Prallvorrichtung auf die Schüttgutstärke geschlossen wird,
**dadurch gekennzeichnet**, daß die ausweichbar gelagerte Prallvorrichtung aus einem im wesentlichen senkrecht angeordneten Rohr (Prallrohr (6)) besteht, daß ein vorgelagertes Einlaufrohr (5) das Schüttgut in schräger Richtung von oben her in das Prallrohr (6) einströmen läßt und daß das untere Ende (6b) des Prallrohres (6) derart abgewinkelt ist, daß das das ausweichbar gelagerte Prallrohr (6) durchlaufende Schüttgut beim Auftreffen auf den abgewinkelten Teil (6b) des Prallrohres (6) eine weitere Auslenkung des Prallrohres bewirkt.

2. Meßeinrichtung zur Erfassung der Förderstärke eines Schüttgutstromes mit einer Leitvorrichtung für den Schüttgutstrom sowie einer ausweichbar gelagerten Prallvorrichtung, auf die der Schüttgutstrom beim Durchlaufen der Einrichtung trifft und bei der aus der Größe der Auslenkung der Prallvorrichtung auf die Schüttgutstärke geschlossen wird, **dadurch gekennzeichnet**,
daß der Prallvorrichtung (6) ein zum Prallrohr (6) geneigt angeordnetes Einlaufrohr (5) vorgelagert ist sowie eine Bremseinrichtung für den durchlaufenden Schüttgutstrom.

3. Meßeinrichtung nach Anspruch 1, dadurch gekennzeichnet, daß das untere Ende (6b) des Prallrohres gekrümmt ausgebildet ist.

4. Meßeinrichtung nach Anspruch 1, dadurch gekennzeichnet, daß mit dem Prallrohr (6) eine ortsfest angeordnete Plattformwägezelle (10) verbunden ist.

5. Meßeinrichtung nach Anspruch 2, dadurch gekennzeichnet, daß das Einlaufrohr (5) mit einem etwa rechtwinklig zu diesem vorgelagerten Zuführungsrohr (1) für das Schüttgut verbunden ist.

6. Meßeinrichtung nach Anspruch 5, dadurch gekennzeichnet, daß das Einlaufrohr (5) und das Zuführungsrohr (1) zur Vertikalen um etwa 45° geneigt angeordnet sind.

7. Meßeinrichtung nach Anspruch 2, dadurch gekennzeichnet, daß die Bremseinrichtung im Zuführungsrohr (1) vorgesehen ist.

8. Meßeinrichtung nach Anspruch 7, dadurch gekennzeichnet, daß in Verlängerung des Zuführungsrohres (1) eine das Schüttgut sammelnde Vertiefung (4) als Bremseinrichtung für den Schüttgutstrom vorgesehen ist.

9. Meßeinrichtung nach Anspruch 8, dadurch gekennzeichnet, daß zwischen der Vertiefung (4) und dem Einlaufrohr (5) ein Überlauf (7) für den Eintritt des Schüttgutes in das Einlaufrohr (5) vorgesehen ist.

10. Meßeinrichtung nach Anspruch 7, dadurch gekennzeichnet, daß die Bremseinrichtung aus einer den Querschnitt des Zuführungsrohres (1) teilweise ausfüllenden Blende besteht.

11. Meßvorrichtung nach Anspruch 10, dadurch gekennzeichnet, daß die Blende aus zwei Blendenteilen (20, 21) besteht, die im Bereich der unteren Mantellinie M-M des Zuführungsrohres (1) eine Öffnung freilassen.

12. Meßvorrichtung nach Anspruch 11, dadurch gekennzeichnet, daß die Blendenteile (20, 21) aus zwei abgebogenen Halbschalen bestehen.

13. Meßeinrichtung nach Anspruch 11, dadurch gekennzeichnet, daß im Zuführungsrohr (1) hinter der Durchlaßöffnung (22) der Blendenteile (20, 21) eine schmale Schrägfläche (15) vorgesehen ist, welche das durchlaufende Schüttgut unmittelbar in das Einlaufrohr (5) lenkt.

14. Meßeinrichtung nach Anspruch 13, dadurch gekennzeichnet, daß die Schrägfläche durch eine abgewinkelte Platte (25) gebildet ist, die das auf sie auftreffende Schüttgut unmittelbar in das Einlaufrohr (5) lenkt.

15. Meßeinrichtung nach Anspruch 1 oder 2, gekennzeichnet durch die Kombination folgender Merkmale:
- die Meßeinrichtung weist eine als Rohr ausgebildete ausweichbar gelagerte Prallvorrichtung auf;
- das Rohr läuft im unteren Teil gekrümmt aus, und/oder
- es sind Bremsmittel für den Schüttgutstrom vorgesehen, und/oder
- die Bremsmittel wirken nur auf größere Durchlaufmengen, und/oder
- für geringe Schüttgutmengen sind Mittel für den ungebremsten Durchlauf des Schüttgutes vorgesehen.

## Claims

1. A measuring device for determining the conveying force of a flow of bulk materials with a guiding device for the bulk-material flow and a deflectably positioned baffle device against which the bulk-material flow strikes while moving through the measuring device. and in which the force of the bulk material can be inferred from the degree of deflection of the baffle device.
characterised in that the deflectably positioned baffle device consists of a tube (baffle tube (6)) disposed substantially vertically, an inlet tube (5) positioned upstream allows the bulk material to flow in an oblique direction from above into the baffle tube (6), and the lower end (6b) of the baffle tube (6) is angled in such a way that, on striking against the angled part (6b) of the baffle tube (6), the bulk material moving through the deflectably positioned baffle tube causes further deflection of the baffle tube.

2. A measuring device for determining the conveying force of a flow of bulk materials with a guiding device for the bulk-material flow and a deflectably positioned baffle device against which the bulk-material flow strikes while moving through the measuring device, and in which the force of the bulk material can be inferred from the degree of deflection of the baffle device, characterised in that an inlet tube (5) disposed at an angle to the baffle tube (6), as well as a braking device for the bulk-material flow passing through, is positioned upstream of the baffle device (6).

3. A measuring device according to Claim 1, characterised in that the lower end (6b) of the baffle tube is curved.

4. A measuring device according to Claim 1, characterised in that a stationarily disposed platform weighing cell (10) is connected to the baffle tube (6).

5. A measuring device according to Claim 2, characterised in that the inlet tube (5) is connected to a feeder tube (1) for the bulk material, positioned at roughly a right angle upstream of it.

6. A measuring device according to Claim 5. characterised in that the inlet tube (5) and the feeder tube (1) are disposed at an angle of about 45° to the vertical.

7. A measuring device according to Claim 2, characterised in that the braking device is provided in the feeder tube (1).

8. A measuring device according to Claim 7, characterised in that, in extension of the feeder tube (1), a bulk material-collecting depression (4) is provided as the device for braking the bulk-material flow.

9. A measuring device according to Claim 8, characterised in that an overflow (7) for the entry of the bulk material into the inlet tube (5) is provided between the depression (4) and the inlet tube (5).

10. A measuring device according to Claim 7, characterised in that the braking device consists of a screen partially filling the cross-section of the feeder tube (1).

11. A measuring device according to Claim 10, characterised in that the screen consists of two screen components (20, 21) which leave an opening in the region of the lower generatrix M-M of the feeder tube (1).

12. A measuring device according to Claim 11, characterised in that the screen components (20, 21) consist of two curved shells.

13. A measuring device according to Claim 11, characterised in that a narrow, oblique surface (15) is provided behind the admission opening (22) of the screen components (20, 21), which directs the through-flowing bulk material directly into the inlet tube (5).

14. A measuring device according to Claim 13, characterised in that the oblique surface is formed by an angled plate (25), which directs the bulk material striking against it directly into the inlet tube (5).

15. A measuring device according to Claim 1 or 2, characterised by the combination of the following characteristics:
- the measuring device has a deflectably positioned baffle device in the form of a tube:
- the tube follows a curved course in the lower part, and/or
- braking means are provided for the bulk-material flow, and/or
- the braking means act only on fairly large through-flow volumes, and/or
- for small bulk-material volumes, means are provided for the unbraked passage of the bulk material.

## Revendications

1. Dispositif de mesure pour détecter l'intensité de transport d'un flux de produit en vrac, comprenant un dispositif de guidage pour le flux de produit en vrac ainsi qu'un dispositif de rebondissement placé de façon à pouvoir être dévié, sur lequel tombe le flux de produit en vrac lorsqu'il traverse le dispositif, et dans lequel le degré de la déviation du dispositif de rebondissement permet de déduire le volume de produit en vrac,
caractérisé en ce que le dispositif de rebondissement placé de façon à pouvoir être dévié se compose d'un tuyau disposé globalement verticalement (tuyau de rebondissement (6), en ce qu'un tuyau d'amenée (5) placé en amont laisse entrer le produit en vrac dans une direction oblique par le haut dans le tuyau de rebondissement (6) et en ce que l'extrémité inférieure (6b) du tuyau de rebondissement (6) est coudée de telle sorte que le produit en vrac traversant le tuyau de rebondissement (6) placé de façon à pouvoir être dévié provoque une déviation supplémentaire du tuyau de rebondissement lorsqu'il tombe sur la partie coudée (6b) du tuyau de rebondissement (6).

2. Dispositif de mesure pour détecter l'intensité de transport d'un flux de produit en vrac, comprenant un dispositif de guidage pour le flux de produit en vrac ainsi qu'un dispositif de rebondissement placé de façon à pouvoir être dévié, sur lequel tombe le flux de produit en vrac lorsqu'il traverse le dispositif, et dans lequel le degré de la déviation du dispositif de rebondissement permet de déduire le volume de produit en vrac,
caractérisé en ce qu'un tuyau d'amenée (5), incliné par rapport au tuyau de rebondissement (6), et un dispositif de freinage pour le flux de produit en vrac de passage sont placés en amont du dispositif de rebondissement (6).

3. Dispositif de mesure selon la revendication 1,
caractérisé en ce que l'extrémité inférieure (6b) du tuyau de rebondissement est réalisée de façon courbe.

4. Dispositif de mesure selon la revendication 1,
caractérisé en ce qu'une cellule de pesée à plate-forme (10), disposée de façon fixe, est reliée au tuyau de rebondissement (6).

5. Dispositif de mesure selon la revendication 2,
caractérisé en ce que le tuyau d'amenée (5) est relié à un tuyau d'alimentation (1) pour le produit en vrac, placé en amont de celui-ci de façon sensiblement perpendiculaire.

6. Dispositif de mesure selon la revendication 5,
caractérisé en ce que le tuyau d'amenée (5) et le tuyau d'alimentation (1) sont disposés de façon inclinée d'environ 45° par rapport à la verticale.

7. Dispositif de mesure selon la revendication 2,
caractérisé en ce que le dispositif de freinage est prévu dans le tuyau d'alimentation (1).

8. Dispositif de mesure selon la revendication 7,
caractérisé en ce que, en prolongement du tuyau d'alimentation (1), un renfoncement (4) collectant le produit en vrac est prévu en tant que dispositif de freinage pour le flux de produit en vrac.

9. Dispositif de mesure selon la revendication 8,
caractérisé en ce que, entre le renfoncement (4) et le tuyau d'amenée (5), un trop-plein (7) est prévu pour l'entrée du produit en vrac dans le tuyau d'amenée (5).

10. Dispositif de mesure selon la revendication 7,
caractérisé en ce que le dispositif de freinage se compose d'un obturateur remplissant partiellement la section transversale du tuyau d'alimentation (1).

11. Dispositif de mesure selon la revendication 10,
caractérisé en ce que l'obturateur se compose de deux parties d'obturateur (20, 21) qui dégagent une ouverture au niveau de la génératrice inférieure M-M du tuyau d'alimentation (1).

12. Dispositif de mesure selon la revendication 11,
caractérisé en ce que les parties d'obturateur (20, 21) se composent de deux semi-coques arrondies.

13. Dispositif de mesure selon la revendication 11,
caractérisé en ce que dans le tuyau d'alimentation (1), derrière l'ouverture de passage (22) des parties d'obturateur (20, 21), une surface inclinée (15) étroite est prévue qui guide le produit en vrac directement dans le tuyau d'amenée (5).

14. Dispositif de mesure selon la revendication 13,
caractérisé en ce que la surface inclinée est réalisée par un plateau coudé (25) qui guide le produit en vrac tombant sur celle-ci directement dans le tuyau d'amenée (5).

15. Dispositif de mesure selon la revendication 1 ou la revendication 2, caractérisé, par la combinaison des caractéristiques suivantes :
- le dispositif de mesure présente un dispositif de rebondissement réalisé sous la forme d'un tuyau et placé de façon à pouvoir être dévié ;
- le tuyau se termine de façon courbe dans la partie inférieure, et/ou
- des moyens de freinage sont prévus pour le flux de produit en vrac, et/ou
- les moyens de freinage n'agissent que sur des quantités de passage assez grandes, et/ou
- pour des quantités de produit en vrac plus petites, des moyens sont prévus pour le passage sans freinage du produit en vrac.
